Europäisches Patentamt

European Patent Office

Office européen des brevets

(11) Publication number: **0 281 281**
**A1**

## (12) EUROPEAN PATENT APPLICATION

(21) Application number: **88301386.4**

(22) Date of filing: **18.02.88**

(51) Int. Cl.⁴ **G01P 1/02**

(30) Priority: **26.02.87 GB 8704500**

(43) Date of publication of application:
**07.09.88 Bulletin 88/36**

(84) Designated Contracting States:
**BE DE FR GB NL**

(71) Applicant: **Grau Girling Limited**
**Carsluke Street**
**Blackburn(GB)**

(72) Inventor: **Broome, William Sydney**
**53, Pepper Street**
**Inkberrow Worcs.(GB)**

(74) Representative: **Waite, Anthony William et al**
**MARKS & CLERK Alpha Tower Suffolk Street**
**Queensway**
**Birmingham B1 1TT(GB)**

(54) **Wheel speed sensor.**

(57) A wheel speed sensor has a magnetic core (12) supported within a can (13) of relatively hard material. An axially outermost end surface (14A) of the can, in use, faces a rotary exciter and the can is of relatively hard, wear and impact resistant material to minimise wear occurring upon contact between the sensor and exciter. The can has an aperture (15) arranged to explose the working end (12A) of the core and thereby afford uninterrupted co-operation between the core and exciter in order to maximise output of the sensors.

FIG 2

EP 0 281 281 A1

## WHEEL SPEED SENSOR.

This invention relates to a vehicle wheel speed sensor intended to provide a magnetic pole piece for interaction with a co-operating element such that a variation in reluctance occurs during relative rotation between said element and sensor which causes the sensor to provide an electrical output representative of wheel speed. In one conventional arrangement, the sensor is installed as a stator with the pole piece in opposition to a surface of a corresponding rotor or exciter rotatable by the wheel, the rotor surface being provided with a series of apertures or recesses which pass the pole in succession to generate a pulsed signal in the sensor useful in controlling the operation of an anti-skid system, in known manner.

In one conventional type of wheel speed sensor, a magnetic pole piece is enclosed within a plastic moulded body with an end of the pole piece exposed and flush with an end of the body. Whilst this arrangement is ideal for maximum output from the sensor, the encapsulating material can suffer serious wear or impact damage as a result of contact with the exciter when the latter rotates out of true.

An attempt has been made to deal with the wear and damage problems by placing the pole piece within a sheath of wear resistant material, such as non-magnetic ferrous metal, the sheath being arranged to extend over the axially facing working end of the pole piece so as to minimise the deleterious effects of contact with the rotating exciter. Such an arrangement, whilst producing satisfactory wear qualities, necessitates spacing the end of the pole piece from the exciter by at least the thickness of the protective sheath and this can cause a reduced output from the sensor which is unsatisfactory in some circumstances.

An object of the present invention is to provide a vehicle wheel speed sensor in which an improved output is obtainable whilst retaining satisfactory wear qualities.

According to the invention, a vehicle wheel speed sensor comprises means supporting a pole piece presenting a working end surface, and a relatively hard protective element arranged to provide at least an axially outermost surface of the sensor, said element being apertured to expose an area of said pole piece working end surface.

In one convenient arrangement, said protective element is a can or sheath of relatively hard material, such as non-ferrous metal, surrounding at least a part of the pole piece and having a part providing said outermost end surface of the sensor. The pole piece may conveniently be supported within the can or sheath by way of a surrounding sensing coil.

Alternatively, the means supporting the pole piece may be a moulded body, as of plastics material for example, encapsulating the pole piece except for said working end surface, the relatively hard protective element being a separate part providing the axially outermost end surface of the sensor.

Preferably, the pole piece extends at least partially through the protective element and may conveniently so extend far enough to bring said working end surface flush with said axially outermost end surface.

The invention will now be described, by way of example, with reference to the accompanying drawings in which:-

Figure 1 is a diagrammatic view of one form of vehicle internal shoe drum brake incorporating the wheel speed sensor of the invention;

Figure 2 is a view to an enlarged scale of the wheel speed sensor shown in Figure 1, and

Figure 3 is a scrap view of part of an alternative form of the wheel sensor of the invention.

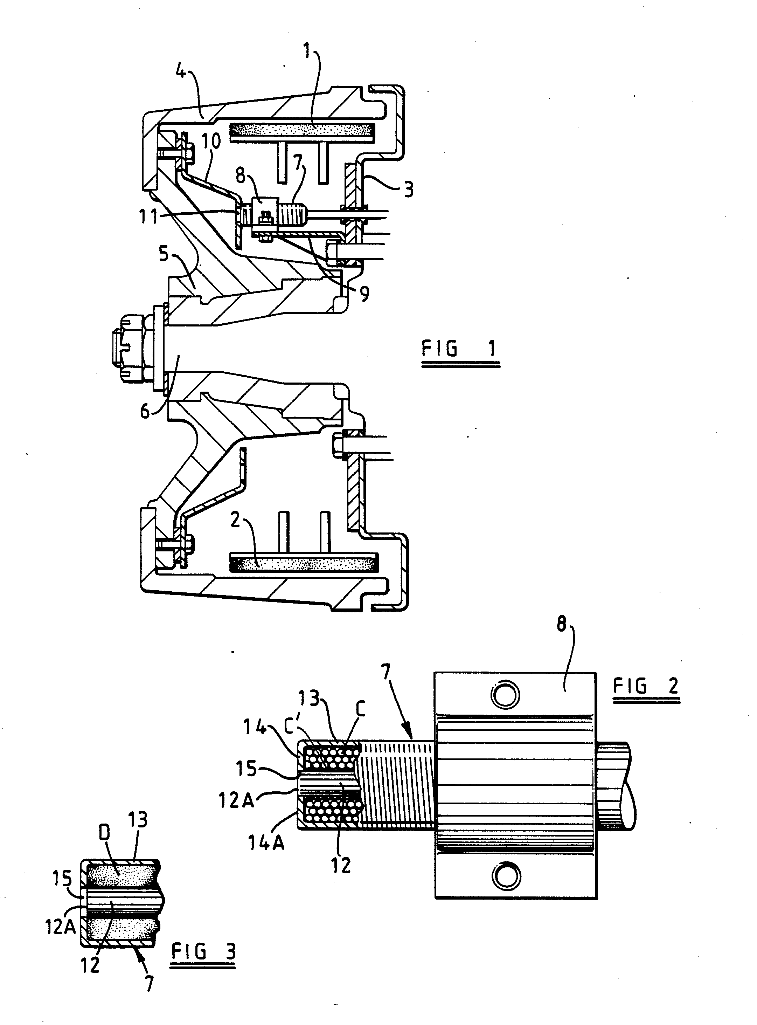

The brake illustrated in Figure 1 comprises a pair of brake shoes 1, 2 mounted on a back plate 3 and being arranged for separation by actuating means, such as an hydraulic wheel cylinder (not shown), into braking engagement with a rotatable brake drum 4 carried by a hub 5 rotatably mounted on an axle 6. A wheel speed sensor 7 is secured by means of a clamp 8 to a bracket 9 mounted on the back plate 3 and co-operates with an exciter plate 10 fast for rotation with the hub 5 and having a series of apertures 11 arranged in a circular formation to move in succession past the sensor 7. This has the effect of varying the air gap between a magnetic core of the sensor and the exciter such as to produce a variable reluctance and a corresponding variable electrical output from the sensor which is fed, for example, to an anti-skid control system in conventional manner.

The sensor is illustrated in more detail in Figure 2 and will be seen to include a magnetic core 12 supported within a surrounding can or sheath 13 of non-magnetic ferrous material, such as stainless steel. In the embodiment shown, the core is supported within the can by way of a surrounding sensing coil represented at C, the core extending through an internal former C' of the coil.

The end wall 14 of the can is apertured at 15 at a position co-axial with the core 12 and the latter extends through the aperture 15 to a position in which the end surface 12A of the core is flush with the outer surface 14A of the wall 14.

The axially outermost end wall 14 of the sensor is likely to be subject to rubbing or impact contact with the exciter 10 which can occur due to mis-alignment of the latter and/or wear developing in the hub mounting bearings. By making the can 13 of relatively hard material, the end surface 14A presented to the exciter is able to withstand the aforesaid contact and to provide considerable resistance against wear and damage. However, since the aperture 15 affords uninterrupted co-operation between the pole piece and exciter, the electrical output provided by the sensor is not significantly diminished by the provision of the can 13.

In the alternative embodiment illustrated in Figure 3, the core (12) and its surrounding coil (not shown) may be encapsulated within a moulded body D of plastics material, with the can 13 surrounding the moulded body. The end wall of the can is apertured at 15 as before, and the core (12) is shown positioned in alignment with the aperture with its end face (12A) lying behind the aperture. It would alternatively be possible for the core to extend into the aperture, either partially, or, as shown, to a flush position similar to that in Figure 1.

It would be possible to provide a plurality of pole pieces 12 and a corresponding number of apertures through the wall 14, with one or more of the pole pieces extending into flush relationship with the surface 14A or inset within the wall 14 or beyond that wall, or in any required combination of these dispositions. When the core piece is encapsulated within a body of plastics material, the protective element may be in the form of a plate arranged on the end surface of the plastic body, the plate being apertured co-axially with the core 12. Again, the core may extend wholly through the protective element to a flush position similar to that illustrated in Figure 2, or part-way through the element or disposed behind the element, as seen in Figure 3. The can (13) can be of any suitable non-metallic material, such as hard plastics, having the necessary wear and impact resistance.

The invention will be seen to achieve, in simple and convenient manner, a sensor having an excellent combination of wear resistance and electrical output.

**Claims**

1. A vehicle wheel speed sensor comprising means (C) supporting a pole piece (12) presenting a working end surface (12A), and a relatively hard protective element (13) arranged to provide at least an axially outermost end surface (14A) of the sensor, characterised in that said element (13) is apertured (15) to expose an area of said pole piece working end surface (12A).

2. A sensor according to Claim 1 characterised in that said protective element is a sheath (13) of relatively hard material surrounding at least a part of the pole piece and having a part providing said outermost end surface of the sensor (14A).

3. A sensor according to Claim 2 characterised in that the pole piece (12) is supported within the sheath (13) by way of a surrounding sensing coil (C).

4. A sensor according to Claim 1 characterised in that the pole piece supporting means is a moulded body encapsulating the pole piece except for said working end surface, said relatively hard protective element being a separate part providing the axially outermost end surface of the sensor.

5. A sensor according to any one of the preceding claims characterised in that the pole piece (12) extends at least partially through the protective element (14).

6. A sensor according to any one of the preceding claims characterised in that the pole piece (12) extends through the protective element (14) to a position in which said working end surface (12A) is flush with said axially outermost end surface.

7. A sensor according to any one of Claims 1 to 4 characterised in that said working end surface (12A) of the pole piece lies behind and in alignment with the aperture (15) in said protective element (13).

8. A sensor according to any one of the preceding claims characterised in that the sheath (13) is of non-magnetic ferrous metal.

9. A sensor according to any one of Claims 1 to 7 characterised in that the sheath (13) is of hard plastics material.

FIG 1

FIG 2

FIG 3

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | FR-A-2 263 519 (BOSCH) <br> * Page 5, lines 1-5; figure 1 * <br> --- | 1,2,4-6 ,9 | G 01 P 1/02 |
| X | US-A-3 890 517 (MARSH et al.) <br> * Column 4, lines 27-39; figure 4 * <br> --- | 1,2,4,5 ,7,9 | |
| X | US-A-3 998 298 (FLEAGLE) <br> * Column 5, lines 41-60; figure 3 * <br> --- | 1-5,9 | |
| A | US-A-4 011 478 (REENSTRA) <br> * Column 4, line 55 - column 5, line 33; figure 2 * <br> ----- | 3,8 | |
| | | | TECHNICAL FIELDS SEARCHED (Int. Cl.4) |
| | | | G 01 P |

The present search report has been drawn up for all claims

| Place of search | Date of completion of the search | Examiner |
|---|---|---|
| THE HAGUE | 06-06-1988 | HANSEN P. |

EPO FORM 1503 03.82 (P0401)